# EUROPEAN PATENT SPECIFICATION

(11) **EP 1 674 678 B1**
(45) Date of publication and mention of the grant of the patent: **09.01.2008**
(21) Application number: 04425934.9
(22) Date of filing: 22.12.2004
(51) Int. Cl.: F01M 13/00, H05B 3/50, H05B 3/06

(54) **Heating device for blow-by conduits of i.c. engines**
Heizvorrichtung zur Kurbelgehäuseentlüftung für Brennungskraftmaschinen
Dispositif de chauffage pour conduit de ventilation d'un carter de moteur à combustion

(43) Date of publication of application: 28.06.2006
(73) Proprietor: CEBI S.p.A., I-10090 Cascine Vica Rivoli (Torino) (IT)
(72) Inventor: Fusaro, Duilio, 10098 Rivoli (TO) (IT); Zerbini, Dario, 10091 Alpignano (TO) (IT)
(74) Representative: Spandonari, Carlo

(56) References cited:
- EP-A- 0 333 906
- EP-A- 1 314 863
- US-A- 6 136 280

## Description

The present invention relates to a heating device for blow-by pipes in internal combustion engines.

In internal combustion engines, the mixture of lubricating oil and residues stored in the oil sump evaporates due to the heat of combustion in the cylinders. The oily vapor fills the crankshaft case and rises up to the bottoms of the pistons in their respective cylinders. A fraction of the oil vapors seeps through the cavity between the piston rings surrounding the piston and the skirt of the respective cylinder, and flows into the combustion chamber of the cylinders.

In more recent internal combustion engines, the vapor in the oil sump and in the crankshaft case is piped into the air-induction duct via a so-called "blow-by" pipe, and is burned in the combustion chamber together with the fuel, in order to prevent this considerably polluting, oily mixture from spreading in the environment.

In cold climates, the humid fraction of the oil vapor can freeze and obstruct the gauged hole that bypasses the throttle valve when closed, i.e., with the engine idling, thereby obstructing the flow of air and vapor into the cylinders.

In the intent of overcoming this drawback, it is known (see, e.g., EP-1 314 863) to provide the blow-by pipe with a heating device that generally consists of a tube of a conductive material, such as copper, which is electrically heated by a pair of electrical contact members connected to a power supply, with a PTC element sandwiched therebetween. A jacket of a synthetic matter is molded over the assembly comprising the electrical contact members, the PTC element, and the tube. A generic heater device using PTC elements is disclosed in EP-0 333 906.

Since the high pressures generated during molding may cause mutual displacements of the electrical contact members, the PTC element, and the tube, thereby compromising the stability and the reliability of the mechanical contact which are required for an effective thermal and electrical conduction during operation, it is known to previously glue the above parts to each other by special glues of a conductive material.

However, this approach is not satisfactory in that the glues are not effectively proof against the high temperatures and pressures generated during molding.

It also has been proposed to weld the electrical contact members, the PTC element, and the tube, to each other by brazing. Although such approach provides a firm connection of the above internal components of the device, however, the thermal shock due to the brazing process may cause the PTC element to crack.

Moreover, the shrinkage of the synthetic material after molding may cause micro-cracks on the jacket, through which the oil vapors may seep. Another drawback of the known heating devices is that, in these circumstances, the PTC element and the electrical contact members are exposed to these vapor seepages, with risk of short circuits and fires.

Therefore, a main object of the present invention is to provide an improved heating device for blow-by pipes in internal combustion engines, in which the mechanical contact among the electrical contact members, the PTC element, and the tube, is more reliable and stable both during and after the molding process, for a more effective and reliable conduction during operation.

Another aim of this invention is to provide a heating device, in which the PTC element is firmly sandwiched between the contact members, thereby avoiding any risk of damages or cracking, and which is also sheltered from any seepage of oil vapors.

The above object and other aims and advantages, which will better appear from the following description, are achieved by the heating device having the features recited in claim 1, while the dependent claims state other advantageous, unessential features of the invention.

The invention will be now described in more detail with reference to a preferred, non-exclusive embodiment, which is shown by way of non limiting example in the attached drawings, wherein:

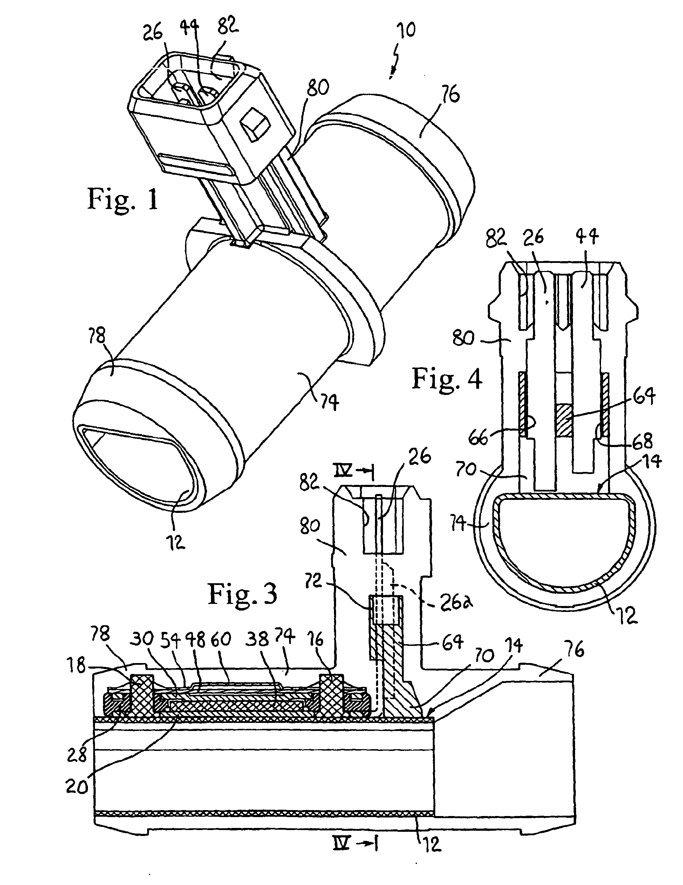

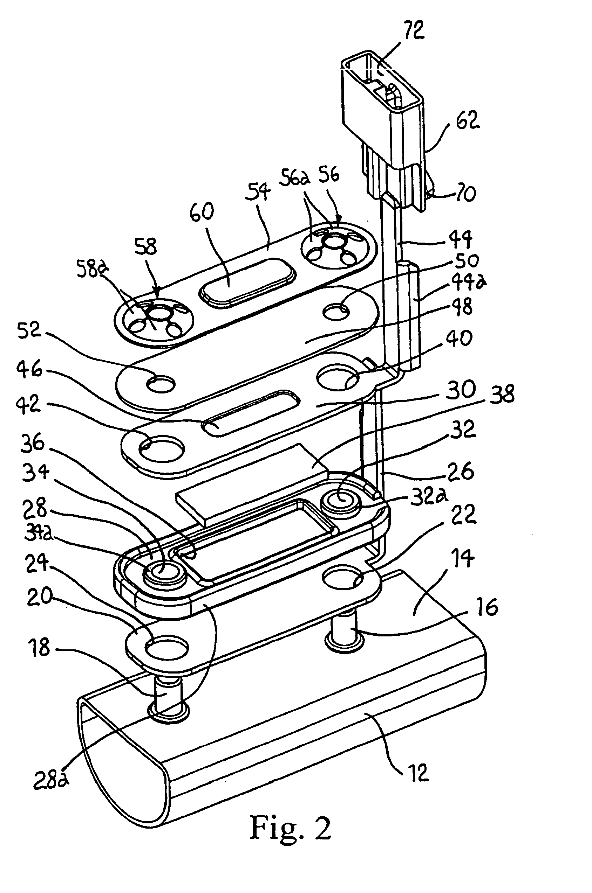

Fig. 1 is a perspective view of the heating device according to this invention;
Fig. 2 is an exploded, perspective view of internal components of the heating device of Fig. 1;
Fig. 3 is a view in axial cross-section view of the heating device of Fig. 1;
Fig. 4 is a view in transverse cross-section of the heating device according to the invention, along line IV-IV of Fig. 3.

With reference to the above Figures, a heating device 10 is installable along a blow-by pipe of a general internal combustion engine (not shown). Device 10 according to this invention comprises a copper tube 12 having a flattened longitudinal wall 14 provided with a pair of screws 16, 18 rising at right angle from respective opposite ends of wall 14 along its middle line and welded to the wall with their screwheads.

An elongated, lower contact plate 20 of a conductive material, e.g. copper, is mounted on screws 16, 18 through passages 22, 24 that surround the screwheads of the respective screws, and lies upon flattened wall 14. A first contact blade 26 with a bent bracing edge 26a rises at right angle from one end of lower plate 20.

A silicone insulating spacer 28 is sandwiched between lower contact plate 20 and a similarly shaped, upper contact plate 30 which will be described in more detail below. Insulating spacer 28 is mounted on screws 16, 18 through end holes 32, 34 having upwardly projecting rims 32a, 34a, and has a rectangular, central opening 36 enclosing a PTC element 38. Insulating spacer 28 is surrounded by a peripheral ridge 28a rising from both its sides and surrounding contact plates 20, 30.

Similarly to lower plate 20, upper plate 30 also is of a conductive material, e.g. copper, and has end passages 42, 44 that surround projecting rims 32a, 34a of the end holes of the insulating spacer. As a result, the upper plate is electrically insulated relative to screws 16, 18 and to lower contact plate 20. A second contact blade 44 with a bent bracing edge 44a rises at right angle from one end of upper plate 30. Upper plate 30 is shaped with an elongated dished central area 46 butted against the upper face of PTC element.

Upper plate 30 is covered by an insulating film 48 which is made of silicone and has openings 50, 52 for the screws.

Contact plates 20, 30, PTC element 38, insulating spacer 28, and insulating film 48, are sandwiched between tube 12 and a metal plate 54 provided with suitably shaped, retaining seats 56, 58 having radial, elastic fins 56a, 58a that restrainedly engage the threaded, free ends of screws 16, 18 respectively. Metal plate 54 is shaped with an upwardly dished central area 60 for bracing.

A spacing member 62 is mounted on contact blades 26, 44. Spacing member 62 has a main case 64 with spaced passages 66, 68 for contact blades 26, 44 respectively, a foot 70 lying upon flattened wall 14, and an upper recess 72 adapted to be filled with a liquid, insulating material, e.g. silicone (not shown).

A jacket 74 of a synthetic material is molded over the above-described assembly. Jacket 74 has end fittings 76, 78 aligned to the ends of tube 12, and a tower 80, which surrounds spacing member 62 and contact blades 26, 44 and is open on its upper side to receive a power supply connector (not shown) in a socket 82 housing the free ends of the contact blades.

The internal components of heating device 10 are affixed to screws 16, 18 and are firmly sandwiched between flattened wall 14 and metal plate 54. Accordingly, any mutual displacements of the electrical contact, the PTC element, and the tube, due to the high molding pressure, are avoided during molding, thereby providing the required electrical stability and thermal conduction during operation.

During operation, insulating spacer 30 sealingly insulates the PTC element and contact plates 20, 30 from any vapor seepage, which could cause short circuit of the PTC element with risk of fire. Silicone film 48 electrically insulates upper plate 30 relative to metal plate 54 and to screws 16, 18. By filling recess 72 of spacing member 62 with a liquid, insulating material, oil seepages vapor through the connector are avoided.

A preferred embodiment of the invention has been described herein, but of course many changes may be made by a person skilled in the art, within the scope of the inventive concept. In particular, the materials may be different from the above-mentioned ones. For example, tube 12 and plates 20, 30 may be made of a material other than copper, provided that it is a conductive material. Also, the material of insulating spacer 28 and of insulating film 48 may be other than silicone, provided that it is proof against the high temperatures generated during molding. Also, the metal plate may be replaced by other suitable retaining means, such as, e.g., nuts tightened upon the screws, and the like. Further, though the use of screws 16, 18 is particularly advantageous, other generally pin-shaped, projecting parts may be used, which have a circumferential groove that is restrainedly engageable by metal plate 54 or other suitable retaining means.

## Claims

1. A heating device for blow-by pipes in internal combustion engines, comprising a tube (12) of a conductive material, a PTC element (38) sandwiched between a lower contact plate (20), which is adjacent to the outer skirt of the tube (12), and an upper contact plate (30) both connected to respective contact blades (26, 44), and a molded jacket (74), which has end fittings (76, 78) aligned to the ends of the tube (12) and is open around the contact blades (26,44) to receive a power supply connector,
- an insulating spacer (28) sandwiched between the lower contact plate (20) and the upper contact plate (30) and enclosing said PTC element (38),
- at least one projecting part (16, 18) rising from the outer skirt of the tube (12) and engaging corresponding passages (22, 24, 40, 42) through the contact plates, and
**characterized in that** it further comprises
- restraint means (54) engaging the free end of the projecting part (16, 18) to bias the contact plates (20, 30) and the PTC element (38) against the tube (12);
and further **characterized in that** said jacket (74) is molded over an assembly comprising at least the tube (12), the contact plates (20, 30), the PTC element (38), the insulating spacer (28) and the restraint means (54).

2. The device of claim 1, **characterized in that** said at least one projecting part consists of a pair of pins (16, 18) having their heads welded to the wall of the tube (12).

3. The device of claim 2, **characterized in that** said insulating spacer (28) has holes (32, 34) engaged by the pins (16, 18) and having projecting rims (32a, 34a) interposed between the passages (40, 42) on the upper plate (30) and the pins (16, 18).

4. The device of claim 3, **characterized in that** said insulating spacer (28) has a peripheral ridge (28a) rising from both its sides and surrounding the contact plates (20, 30).

5. The device of anyone of claims 1 to 4, **characterized in that** at least one of said plates (30) is shaped with a dished area (46) butted against the PTC element (38).

6. The device of anyone of claims 2 to 5, **characterized in that** the upper plate (30) is covered by an insulating film (48) having openings (50, 52) for the pins, and **in that** said pins (16, 18) have at least one circumferential groove and said restraint means (54) comprise a metal plate (54) provided with shaped, retaining seats (56, 58) that restrainedly engage the circumferential grooves of the respective pins (16, 18).

7. The device of claim 6, **characterized in that** said shaped, retaining seats (56, 58) have radial, elastic fins (56a, 58a) that restrainedly engage said circumferential grooves.

8. The device of claim 6 or 7, **characterized in that** said pins consist of screws (16, 18).

9. The device of anyone of claims 6 to 8, **characterized in that** said metal plate (54) is shaped with a dished central area (60) for bracing.

10. The device of anyone of claims 1 to 9, **characterized in that** a spacing member (62) is mounted on contact blades (26, 44) and has a main case (64) with spaced passages (66, 68) for respective contact blades (26, 44), and an upper recess (72) adapted to be filled with a liquid, insulating material.

## Patentansprüche

1. Heizeinrichtung für Kurbelgehäuseentlüftungsrohre in Verbrennungsmotoren, mit
- einem Rohr (12) aus einem leitfähigen Material, einem PTC-Element (38), das sandwichartig zwischen einer unteren Kontaktplatte (20), die dem Außenmantel des Rohrs (12) benachbart ist, und einer oberen Kontaktplatte (30) angeordnet ist, die beide an entsprechende Kontaktfahnen (26, 44) angeschlossen sind, und einer geformten Umhüllung (74), die mit den Enden des Rohrs (12) ausgerichtete Endanschlüsse (76, 78) aufweist und um die Kontaktfahnen (26, 44) offen ist, um einen Stromzuführungssteckverbinder aufzunehmen,
- einem isolierenden Abstandshalter (28), der sandwichartig zwischen der unteren Kontaktplatte (20) und der oberen Kontaktplatte (30) und das PTC-Element (38) umgebend angeordnet ist, und
- zumindest einem vorstehenden Teil (16, 18), das von dem Außenmantel des Rohrs (12) ansteigt und mit korrespondierenden Durchlässen (22, 24, 40, 42) durch die Kontaktplatten in Eingriff steht,
**dadurch gekennzeichnet, dass** sie ferner umfasst:
- eine Rückhalteeinrichtung (54), die mit dem freien Ende des vorstehenden Teils (16, 18) in Eingriff ist, um die Kontaktplatten (20, 30) und das PTC-Element (38) gegen das Rohr (12) vorzuspannen;
und ferner **dadurch gekennzeichnet, dass** die Umhüllung (74) über eine Anordnung geformt ist, die zumindest das Rohr (12), die Kontaktplatten (20, 30), das PTC-Element (38), den isolierenden Abstandshalter (28) und die Rückhalteeinrichtung (54) umfasst.

2. Einrichtung nach Anspruch 1,
**dadurch gekennzeichnet, dass** das zumindest eine vorstehende Teil aus einem Paar von Stiften (16, 18) besteht, deren Köpfe an die Wand des Rohrs (12) geschweißt sind.

3. Einrichtung nach Anspruch 2,
**dadurch gekennzeichnet, dass** der isolierende Abstandshalter (28) Öffnungen (32, 34), in die die Stifte (16, 18) eingreifen, mit vorstehenden Rändern (32a, 34a) aufweist, die zwischen den Durchlässen (40, 42) an der oberen Platte (30) und den Stiften (16, 18) angeordnet sind.

4. Einrichtung nach Anspruch 3,
**dadurch gekennzeichnet, dass** der isolierende Abstandshalter (28) einen Randsteg (28a) aufweist, der von seinen beiden Seiten ansteigt und die Kontaktplatten (20, 30) umgibt.

5. Einrichtung nach einem der Ansprüche 1 bis 4,
**dadurch gekennzeichnet, dass** zumindest eine der Platten (30) mit einem geschüsselten Bereich (46) geformt ist, der an dem PTC-Element (38) anliegt.

6. Einrichtung nach einem der Ansprüche 2 bis 5,
**dadurch gekennzeichnet, dass** die obere Platte (30) mit einer isolierenden Folie (48) mit Öffnungen (50, 52) für die Stifte bedeckt ist und dass die Stifte (16, 18) zumindest eine Umfangsnut aufweisen und die Rückhalteeinrichtung (54) eine Metallplatte (54) aufweist, die mit ausgeformten Rückhaltesitzen (56, 58) versehen ist, die mit den Umfangsnuten der jeweiligen Stifte (16, 18) rückhaltend zusammenwirken.

7. Einrichtung nach Anspruch 6,
**dadurch gekennzeichnet, dass** die ausgeformten Rückhaltesitze (56, 58) radiale elastische Rippen (56a, 58a) aufweisen, die mit den Umfangsnuten rückhaltend zusammenwirken.

8. Einrichtung nach Anspruch 6 oder 7,
**dadurch gekennzeichnet, dass** die Stifte aus Schrauben (16, 18) bestehen.

9. Einrichtung nach einem der Ansprüche 6 bis 8,
**dadurch gekennzeichnet, dass** die Metallplatte (54) zur Versteifung mit einem geschüsselten Mittenbereich (60) ausgeformt ist.

10. Einrichtung nach einem der Ansprüche 1 bis 9,
**dadurch gekennzeichnet, dass** ein Abstandselement (62) an den Kontaktfahnen (26, 44) angebracht ist und einen Hauptkörper (64) mit voneinander beabstandeten Durchlässen (66, 68) für die jeweiligen Kontaktfahnen (26, 44) und eine obere Ausnehmung (72) aufweist, die dazu ausgebildet ist, mit einem flüssigen isolierenden Material gefüllt zu werden.

## Revendications

1. Dispositif de chauffage pour des conduits de ventilation dans des moteurs à combustion interne, comportant un tube (12) d'un matériau conducteur, un élément PTC (38) enserré entre une plaque de contact inférieure (20), qui est adjacente à la jupe extérieure du tube (12), et une plaque de contact supérieure (30), les deux reliées à des lames de contact respectives (26, 44), et une chemise moulée (74), qui a des raccords d'extrémité (76, 78) alignés avec les extrémités du tube (12) et qui est ouverte autour des lames de contact (26, 44) pour recevoir un connecteur d'alimentation électrique,
- une entretoise isolante (28) enserrée entre la plaque de contact inférieure (20) et la plaque de contact supérieure (30), et renfermant ledit élément PTC (38),
- au moins une partie faisant saillie (16, 18) s'étendant à partir de la jupe extérieure du tube (12) et venant en prise avec des passages correspondants (22, 24, 40, 42) à travers les plaques de contact, et
**caractérisé en ce qu'**il comporte en outre
- des moyens de retenue (54) venant en prise avec l'extrémité libre de la partie faisant saillie (16, 18) pour rappeler les plaques de contact (20, 30) et l'élément PTC (38) contre le tube (12),
et **caractérisé en outre en ce que** ladite chemise (74) est moulée autour d'un ensemble comportant au moins le tube (12), les plaques de contact (20, 30), l'élément PTC (38), l'entretoise d'isolation (28) et les moyens de retenue (54).

2. Dispositif selon la revendication 1, **caractérisé en ce que** ladite au moins une partie faisant saillie est constituée d'une paire de broches (16, 18) ayant leurs têtes soudées sur la paroi du tube (12).

3. Dispositif selon la revendication 2, **caractérisé en ce que** ladite entretoise isolante (28) a des trous (32, 34) en prise avec les broches (16, 18), et ayant des rebords faisant saillie (32a, 34a) interposés entre les passages (40, 42) sur la plaque supérieure (30) et les broches (16, 18).

4. Dispositif selon la revendication 3, **caractérisé en ce que** ladite entretoise isolante (28) a une nervure périphérique (28a) s'étendant depuis ses deux côtés et entourant les plaques de contact (20, 30).

5. Dispositif selon l'une quelconque des revendications 1 à 4, **caractérisé en ce qu'**au moins une desdites plaques (30) est mise en forme avec une zone en cuvette (46) en butée contre l'élément PTC (38).

6. Dispositif selon l'une quelconque des revendications 2 à 5, **caractérisé en ce que** la plaque supérieure (30) est recouverte d'un film isolant (48) ayant des ouvertures (50, 52) pour les broches, et **en ce que** lesdites broches (16, 18) ont au moins une gorge circonférentielle, et lesdits moyens de retenue (54) comportent une plaque métallique (54) munie de sièges de retenue mis en forme (56, 58) qui viennent en prise, de manière à les retenir, avec les gorges circonférentielles des broches respectives (16, 18).

7. Dispositif selon la revendication 6, **caractérisé en ce que** lesdits sièges de retenue mis en forme (56, 58) ont des ailettes élastiques radiales (56a, 58a) qui viennent en prise, de manière à les retenir, avec lesdites gorges circonférentielles.

8. Dispositif selon la revendication 6 ou 7, **caractérisé en ce que** lesdites broches sont constituées de vis (16, 18).

9. Dispositif selon l'une quelconque des revendications 6 à 8, **caractérisé en ce que** ladite plaque métallique (54) est mise en forme avec une zone centrale en cuvette (60) pour ancrage.

10. Dispositif selon l'une quelconque des revendications 1 à 9, **caractérisé en ce qu'**un élément d'espacement (62) est monté sur des lames de contact (26, 44) et a une enveloppe principale (64) munie de passages espacés (66, 68) pour des lames de contact respectives (26, 44), et un évidement supérieur (72) adapté pour être rempli d'un matériau isolant liquide.
